# EUROPEAN PATENT APPLICATION

(11) **EP 2 818 341 A1**
(43) Date of publication of application: **31.12.2014**
(21) Application number: 12869268.8
(22) Date of filing: 21.02.2012
(51) Int. Cl.: B60G 7/00, B60G 3/20

(54) **VEHICLE SUSPENSION ARM**

(71) Applicant: Yorozu Corporation, Yokohama-shi, Kanagawa 222-8560 (JP)
(72) Inventor: NAKASATO, Hidetoshi, Yokohama-shi Kanagawa 222-8560 (JP)
(74) Representative: Weber, Jean-François
(86) International application number: PCT/JP2012/054146
(87) International publication number: WO 2013/124971

(57) **Abstract**

[Problem] To provide a curved vehicle suspension arm which exhibits high durability and which can be produced at a high productivity without relying on forging or casting.

[Solution] A second plate (20) is sandwiched between a pair of first plates (10), and the plates (10, 20) are joined to one another by welding.

## Description

### TECHNICAL FIELD

The present invention relates to a suspension arm for a vehicle, which is formed by superimposing plates.

### BACKGROUND ART

In general, control operation of a vehicle causes various forces, such as a twisting force, a tensile force, a bending force or a compressive force etc., from an axle side to act on a suspension arm for a vehicle in the vertical direction, the right-left direction or the front-back direction. In order to obtain a suspension arm having high rigidity to such forces, it is preferable to form the suspension arm in a linear shape extending in a direction in which the forces act.

However, some suspensions for vehicle are required to have a largely curved shape in order to avoid contacts with a variety of members at the vehicle body side. Such an arm having the curved shape tends to have low rigidity to the various forces mentioned above since a body part located between both ends on which the forces act is shaped to be offset with respect to the axis which connects the both ends. Accordingly, for manufacturing a curved arm, the whole or a curved part of the body part is required to have a predetermined volume so as to obtain high rigidity, and the cross-sectional area of the part is required to be large.

However, a conventional suspension arm is obtained by pressing a steel plate so as to meet the demand for weight reduction, and a body part or a curved part cannot have a required volume although such an external shape can be obtained without problems (see the following Patent Literature 1, for example).

Therefore, manufacturing of a curved arm currently needs forming with steel, aluminum alloy or the like by forging or casting in a manner such that the cross-sectional area increases gradually from end parts toward a central part.

### Citation List

### Patent Literatures

Patent Literature 1: JP-2002-205520 A

### SUMMARY OF INVENTION

### Technical Problem

However, forming by forging or casting accompanies heat treatment or machining , and it is disadvantageous in comparison with press forming in terms of manufacturability or productivity.

The present invention has been made with the aim of solving the problem of the conventional techniques described above, and an object thereof is to provide a highly rigid and curved suspension arm for vehicle which can be manufactured with high productivity without forging or casting.

### Means for Solving Problem

A suspension arm for a vehicle according to the present invention which attains the object is characterized by being obtained by sandwiching a second plate between a pair of first plates and bonding the plates with each other by welding.

### Advantageous Effect of the Invention

According to a first aspect of the present invention, a second plate is sandwiched between a pair of first plates, and the plates are bonded to each other by welding so as to form a suspension arm for a vehicle having a curved shape. Accordingly, it is possible to form a highly rigid suspension arm from simple flat plates by pressing or welding, without forging or casting associated with heat treatment or machining, and it is possible to manufacture the suspension arm with high productivity.

According to a second aspect of the present invention, a body part includes a second plate shorter than the first plates, and a stiffening member is provided to cover a space formed between one end of the second plate and both of the first plates and the stiffening member is bonded to internal surfaces of the first plates by welding. Accordingly, it is possible to enhance the rigidity of a curved part of the suspension arm for a vehicle while enhancing the rigidity of ends, and it is possible to obtain an arm having high rigidity as a whole.

According to a third aspect of the present invention, a vicinity region of end plate of both the first plates is expanded gradually outward in a direction perpendicular to the axis, and the stiffening member is provided at the vicinity region of the end plate. Accordingly, end plates of both the first plates are expanded outward in a direction perpendicular to the axis, and it is possible to make a versatility of connection with the vehicle body side or the axle side high and it is also possible to improve the working property.

According to a fourth aspect of the present invention, a collar member is bonded to end plates of the first plates by welding, and an elastic bush and a shaft member are provided in the collar member so that the collar member is connected with the vehicle body side or the axle side via the shaft member. Accordingly, when a twisting force acts on the suspension arm, it is possible to absorb the twisting force or the like into a curved part of the suspension arm at the site of the collar member and the vicinity thereof, and it is possible to reduce transmission of the twisting force.

According to a fifth aspect of the present invention, the interval between both the end plates of the first plates is made larger than the total thickness in case of superimposing the first plates and the second plate, so that the arm is coupled to the vehicle body side or the axle side via a shaft member inserted into a through hole formed at a yoke-form bracket. Accordingly, it is possible to couple the arm to the vehicle body side or the axle side without attaching a collar member to end parts of the first plates, and it is possible to reduce the number of components.

According to a sixth aspect of the present invention, a through hole is formed perpendicular to the plane of the first plates and the second plate, and a "through hole directed part" oriented in the direction of the through hole is provided at vicinity regions of end plate of the first plates. Accordingly, when so-called immersion painting is carried out, for example, excess paint flows through a stiffening bead into the through hole, wasteful consumption of the paint can be prevented, a cost advantage can be obtained, and the strength of the first plates is enhanced due to formation of the stiffening bead.

### BRIEF DESCRIPTION OF DRAWINGS

Fig. 1 is a schematic front view of a suspension wherein a suspension arm according to an embodiment of the present invention is used.
Fig. 2 is a front view of the same suspension arm.
Fig. 3 is a perspective view of the same suspension arm.
Fig. 4 is an exploded perspective view of the same suspension arm.
Fig. 5 is a cross-sectional view along the line 5-5 in Fig. 2.
Fig. 6 is a cross-sectional view along the line 6-6 in Fig. 2.
Fig. 7 is a cross-sectional view along the line 7-7 in Fig. 2.

### DESCRIPTION OF EMBODIMENTS

An embodiment of the present invention is explained hereinbelow with reference to the drawings.

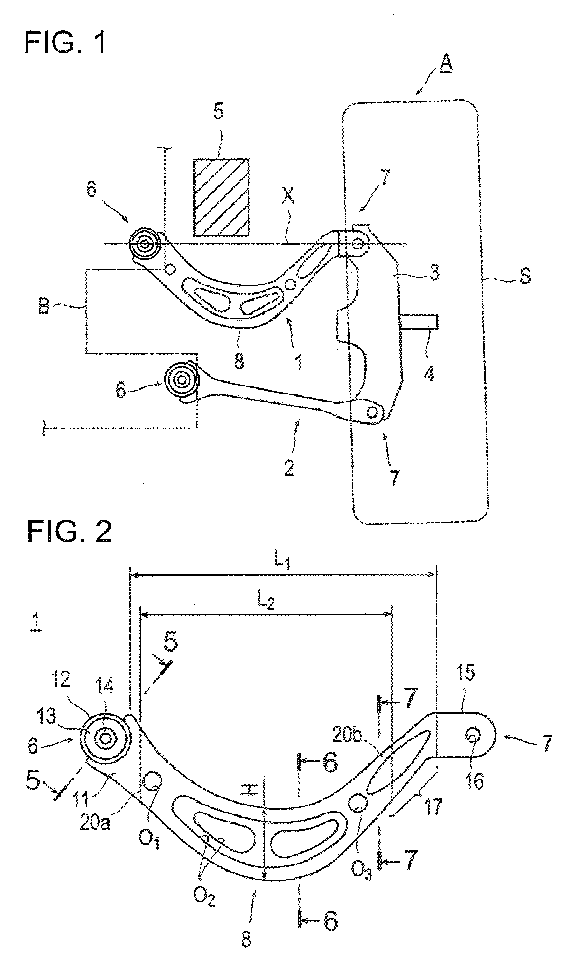

A suspension according to the present embodiment has an upper arm 1 and a lower arm 2 as illustrated in Fig. 1. One end of each of the arms 1 and 2 is coupled to a vehicle body B side, and the other end is coupled to a knuckle 3 at an axle A side. It is to be noted that the reference sign "S" in the figure denotes a wheel, and the reference sign "4" denotes a wheel shaft.

The upper arm 1 has a curved shape to be offset downward with respect to an axis X which connects both ends, in order to avoid contact with a member 5 extending in the front-back direction of the vehicle. The lower arm 2 is configured in a manner such that a linear rod couples both ends.

When operation such as braking or revolution is performed at the vehicle side, various forces act on the arms 1 and 2 from the axle A side via the knuckle 3 in the vertical direction, the right-left direction and the front-back direction.

In response to such forces, the linear lower arm 2 can cause such forces to act in the axial direction when a proper structure such as a ball joint is selected as a support structure of both ends. In some cases, it is also possible to cause such forces to act as a moment on the axis, and to cope with such forces relatively easily.

In contrast, the upper arm 1 having a curved shape cannot cope with such forces easily, since a great twisting force, a tensile force, a bending force, a compressive force or the like act on a middle part even when a support state of both ends is selected properly.

Therefore, in the upper arm 1 of the present embodiment, a curved part is made to have extremely high rigidity, and both right and left ends are made to be deformable to some extent in response to the various forces. That is, in the upper arm 1 of the present embodiment, a coupling part 6 to be coupled to the vehicle body B side, a coupling part 7 to be coupled to the axle side, and a body part 8 having a curved shape between the coupling parts 6 and 7 are made to have a central part which is highly rigid and both ends which are deformable to some extent, by sandwiching a relatively short and thick second plate 20 between a pair of long first plates 10 as illustrated in Figs. 1 to 3.

The following description will give further detailed explanation. The pair of first plates 10 includes hot-rolled steel sheets, which are pressed to have a curved shape and have a thickness t1 of first plates 10 which is formed by relatively thin hot-rolled steel sheets, as a whole, as illustrated in Figs. 2 to 4. The coupling parts 6 and 7 are formed at ends of the first plates 10, and the body part 8 is formed by a main part of the first plates 10 between the coupling parts 6 and 7, and the second plate 20. The second plate 20 has a length L2 in the longitudinal direction smaller than the length L1 of the first plates 10 in the longitudinal direction, and includes a hot-rolled steel sheet, which is pressed and has a thickness t2 of second plate 20 which is formed by relatively thick hot-rolled steel sheets.

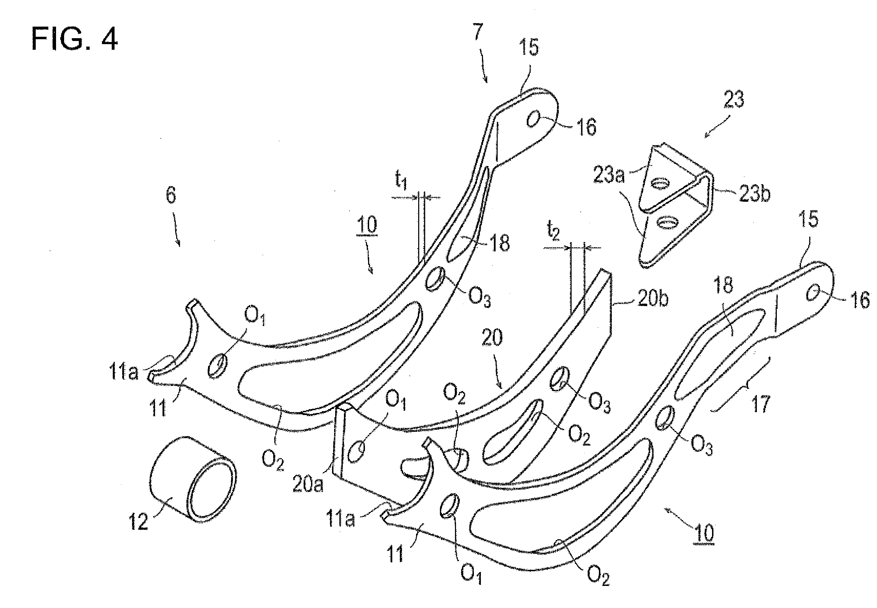

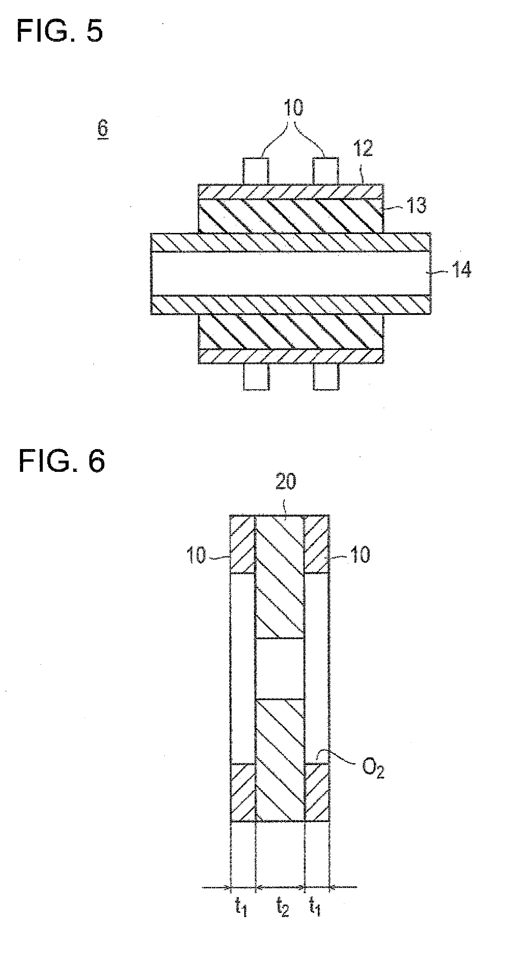

In one coupling part 6, an arc-like recess 11a (see Fig. 4) is formed at one end plate 11 of each of the first plates 10, and a cylindrical collar member 12 is bonded therewith by welding. A bush 13 made of an elastic body is provided inside the collar member 12 as illustrated in Fig. 5, and a hollow shaft 14 inserted into the bush 13 is coupled to a bracket (not illustrated) or the like from the vehicle body B side.

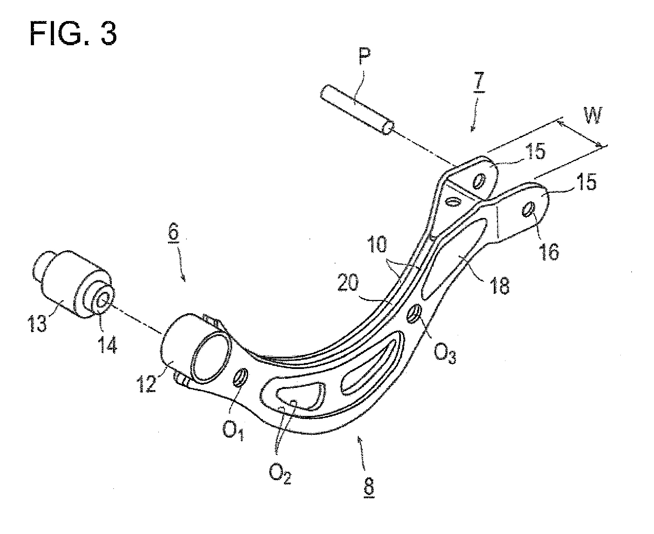

The other coupling part 7 is end plates 15 formed as a pair of yoke-form brackets separated from each other by a predetermined length W as illustrated in Fig. 3, and a pin P is inserted into through holes 16 formed at the end plates 15 so that the coupling part 7 is coupled to the knuckle 3. It is to be noted that coupling to the knuckle 3 may use fastening means, such as a bolt, other than the pin P.

The body part 8 includes the pair of first plates 10, and the second plate 20 disposed between both of the first plates 10 as illustrated in Figs. 2 to 4, and has a sandwich structure wherein the second plate 20 is sandwiched between both of the first plates 10.

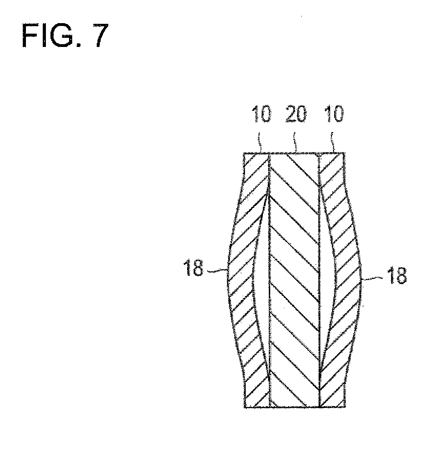

Each first plate 10 is a press-formed article wherein end plates 11 and 15 are formed integrally as illustrated in Fig. 4, and through holes O1 to 03 having predetermined sizes are punched and formed with the aim of weight reduction. Moreover, as illustrated in Figs. 4 and 7, a stiffening bead 18 which swells outward is formed at a part 17 (hereinafter referred to as the "end plate vicinity region 17") close to the end plate 15 of each first plate 10. The stiffening bead 18 is formed not only to enhance the rigidity of the end plate vicinity region 17 but also to help paint to flow toward the through hole 03 or 02 when the first plate 10 is dipped in a paint container for painting. In the present embodiment, the stiffening bead 18 is equivalent to a through hole directed part.

The second plate 20 has arc-like curved shape on which an external shape of second plate 20 is similar to the first plates 10. However, the length L2 in the longitudinal direction is smaller than the length L1 of the first plates 10, and one end 20a or the other end 20b terminates in the vicinity of the end plates 11 in the first plates 10 or at the middle position of the end plate vicinity regions 17.

Accordingly, a space is generated inside both of the first plates 10 at a part surrounded by the other end part 20b of the second plate 20 and the end plate vicinity regions 17 of both of the first plates 10. Since formation of such a space may cause lowering of the strength, a stiffening member 23 is provided between both of the end plate vicinity regions 17 so as to cover the space in the present embodiment, and the stiffening member 23 is bonded to internal surfaces of the first plates 10 by welding.

However, both of the end plates 15 need to be separated from each other by a predetermined length W. Accordingly, the end plate vicinity regions 17 of the first plates 10 which ranges from a position corresponding to the one end of the second plate20 to the end plate 15 of the first plate 10 on both of the first plates 10 is gradually extended outward in a direction perpendicular to the axis, the end vicinity region 17 is widen toward the end. And, the stiffening member 23 is configured in a manner such that upper and lower triangle plates 23a are coupled to each other via a coupling plate 23b, so as to coincide with the widening shape.

Although the thickness of the steel sheet of the first plates 10 or the second plate 20 depends on strength conditions required for the upper arm 1, it is preferable to use a rolled steel sheet having a thickness t2 between 8 mm and 9 mm for the second plate 20 when hot-rolled steel sheets having a thickness t1 between 3 mm and 4 mm are used for the first plates 10, as a specific example.

Coupling between both of the first plates 10 and the second plate 20 may be achieved by forming a recess and a projection at each plate for structural and integral coupling or by using other members such as bolts. However, the first plates 10 and the second plate 20 in the present embodiment are bonded integrally with each other by welding one or both of a ventral surface side and a dorsal surface side of a curved part. It is preferable to bond three plates integrally with each other by welding, since superior strength can be obtained and assembly work of a suspension can be facilitated.

Next, the action will be described.

First, for manufacturing the upper arm 1 having a curved shape, thin hot-rolled steel sheets are pressed so as to form the pair of first plates 10, each of which has a curved shape between the end plates 11 and 15 and has the through holes O1 to 03 and the stiffening bead 18. Moreover, a thick hot-rolled steel sheet is pressed so as to form a curved shape, and form the second plate 20.

Both of the first plates 10 and the second plate 20 are then bonded to each other by welding with the second plate 20 sandwiched by both of the first plates 10. After the three plates are united, the collar member 12 is welded to an arc-like recess 11a of one end plate 11. Moreover, the stiffening member 23 is provided between the end plate vicinity regions 17 of the other end plates 1, and is bonded to internal surfaces of the first plates 10 by welding.

Since the upper arm 1 can be formed from simple plates by pressing or welding as described above, it is possible to manufacture the upper arm 1 with high productivity without heat treatment or machining, which may be required for manufacturing by forging or casting.

A hook or the like is then inserted into the through holes 16 formed at the coupling part 7 side of the upper arm 1, and the upper arm 1 is dipped in a paint container, which stores anticorrosive paint or the like, while in a hanging state. In such a case, the paint is guided to the stiffening beads 18 of the end plate vicinity regions 17 and flows to the through hole 03 or 02, and therefore the paint is not accumulated in the space in both of the end plate vicinity regions 17.

After painting is completed, the bush 13, the hollow shaft 14 or the like is attached to the collar member 12, and the upper arm 1 is completed.

The upper arm 1 of the present embodiment is mounted on a vehicle by coupling the hollow shaft 14 of the collar member 12 to the vehicle body B side and coupling the pin P to the knuckle 3 at the axle A side.

When operation, such as braking or revolution, is performed while vehicle is running, various forces act on the upper arm 1 from an axle A side via the knuckle 3 in the vertical direction, the right-left direction and the front-back direction, and not only a compressive force or a tensile force but also a twisting force or the like acts on a curved central part of the upper arm 1.

The compressive force or the tensile force acts directly, or acts as moment, on the center of a curved part of the upper arm 1 from the hollow shaft 14 or the pin P. However, the upper arm 1 of the present embodiment can withstand the forces or moment, since central parts of the first plates 10 and the second plate 20 have a width H larger than that of ends and the thick and highly rigid second plate 20 is provided.

Moreover, although the twisting force acts intensively on the curved central part of the upper arm 1 by, for example, a force acting on the coupling part 7 in the front-back direction, the thick and highly rigid second plate 20 also withstands the twisting force.

The present invention is not limited to the embodiment described above and can be modified into various forms by those skilled in the art, within a scope of technical ideas of the present invention. For example, although both of the first plates 10 in the embodiment described above are press-formed independently, the present invention is not limited to such forming, and both of the first plates 10 may be press-formed collectively so as to be bent from the center and may sandwich the second plate 20 at the time of being bent.

Moreover, although the one coupling part 6 is bonded to the collar member 12 by welding, and the other coupling part 7 is formed as a pair of yoke-form brackets in the embodiment described above, the present invention is not limited to such a configuration, and both of the coupling parts maybe collar members 12 or yoke-form brackets.

### Industrial Applicability

The present invention can be advantageously utilized for a highly rigid and curved suspension arm for a vehicle, which can be manufactured with high productivity without forging or casting.

### Reference Signs List

- 6, 7:: Coupling part
- 8:: Body part
- 10:: First plate
- 11, 15:: End plate
- 11a:: Arc-like recess
- 12:: Collar member
- 13:: Bush
- 14:: Shaft member
- 16:: Through hole
- 17:: End plate vicinity region
- 18:: Stiffening bead
- 20:: Second plate
- 23:: Stiffening member
- A:: Axle
- B:: Vehicle body
- O1 - O3:: Through hole
- P:: Pin
- t1:: Thickness of first plate
- t2:: Thickness of second plate
- W:: Interval

## Claims

1. A suspension arm for a vehicle, in which a body part between one coupling part to be coupled to a vehicle body side and the other coupling part to be coupled to an axle side has a curved shape as a whole or a part, wherein
the body part has at least a pair of first plates which are press-formed and are disposed to be separated from each other and to face each other, and a second plate which is disposed between both of the first plates and is sandwiched by both of the first plates so as to adhere to at least a part of internal surfaces of both of the first plates, and
any one of a ventral surface side and a dorsal surface side of the second plate is bonded to the first plates by welding or both of the ventral surface and the dorsal surface of the second plate are bonded to the first plates by welding.

2. The suspension arm for a vehicle according to claim 1, wherein
the body part has the second plate with a length in a longitudinal direction shorter than the first plates,
a stiffening member is provided at a space, which is generated between one end of the second plate and both of the first plates, so as to cover the space, and
the stiffening member and internal surfaces of the first plates are bonded to each other by welding.

3. The suspension arm for a vehicle according to claim 2, wherein
the body part is gradually spread in an end plate vicinity region of the first plate, which extends from a position of both of the first plates corresponding to one end of the second plate to an end plate of both of the first plates, outward in a direction perpendicular to an axis, and
the stiffening member is provided at the end plate vicinity region of the first plate.

4. The suspension arm for a vehicle according to any one of claims 1 to 3, wherein
at least one end plate of the first plate is bonded to the collar member by welding, a bush made of an elastic body is provided in the collar member, and
the first plate is coupled to the vehicle body side or the axle side via a shaft member inserted into the bush.

5. The suspension arm for a vehicle according to any one of claims 1 to 3, wherein
in the first plate, an interval between the other end plates is at least made larger than a total thickness of both of the first plates and the second plate which are superimposed on each other, and
the first plate is coupled to the vehicle body side or the axle side via a shaft member inserted into a through hole formed at the end plate.

6. The suspension arm for a vehicle according to any one of claims 1 to 5, wherein the body part has a through hole formed perpendicular to planes of the first plates and the second plate, and has a through hole directed part, which is directed to the through hole, in an end plate vicinity region of the first plates.

## Amended claims

### Amended claims under Art. 19.1 PCT

**1.** (Amended) A suspension arm for a vehicle, in which a body part between one coupling part to be coupled to a vehicle body side and the other coupling part to be coupled to an axle side has a curved shape as a whole or a part, wherein the body part has at least a pair of first plates, which are press-formed and are disposed to be separated from each other and to face each other, and a second plate, which is disposed between both of the first plates and is sandwiched by both of the first plates so as to adhere to at least a part of internal surfaces of both of the first plates in a through-thickness direction of the first plates, and any one of a ventral surface side and a dorsal surface side of the second plate is bonded to the first plates by welding or both of the ventral surface side and the dorsal surface side of the second plate are bonded to the first plates by welding.

**2.** The suspension arm for a vehicle according to claim 1, wherein
the body part has the second plate with a length in a longitudinal direction shorter than the first plates,
a stiffening member is provided at a space, which is generated between one end of the second plate and both of the first plates, so as to cover the space, and
the stiffening member and internal surfaces of the first plates are bonded to each other by welding.

**3.** The suspension arm for a vehicle according to claim 2, wherein
the body part is gradually spread in an end plate vicinity region of the first plate, which extends from a position of both of the first plates corresponding to one end of the second plate to an end plate of both of the first plates, outward in a direction perpendicular to an axis, and
the stiffening member is provided at an end plate vicinity region of the first plate.

**4.** The suspension arm for a vehicle according to any one of claims 1 to 3, wherein
at least one end plate of a first plate is bonded to the collar member by welding,
a bush made of an elastic body is provided in the collar member, and
the first plate is coupled to the vehicle body side or the axle side via a shaft member inserted into the bush.

**5.** The suspension arm for a vehicle according to any one of claims 1 to 3, wherein
in the first plate, an interval between the other end plates is at least made larger than a total thickness of both of the first plates and the second plate which are superimposed on each other, and
the first plate is coupled to the vehicle body side or the axle side via a shaft member inserted into a through hole formed at the end plate.

**6.** The suspension arm for a vehicle according to any one of claims 1 to 5, wherein the body part has a through hole formed perpendicular to planes of the first plates and the second plate, and has a through hole directed part, which is directed to the through hole, in the end plate vicinity region of the first plates.

Statement under Art. 19.1 PCT
In Literature 1 (JP 2002-219918), an upper plate member and a lower plate member are bent so that a flat plate part and a side plate part are formed in each plate member, and the side plate parts of the plate members are brought into contact with each other and welded while the flat plate parts of the plate members are separated from each other. Therefore, claim 1 of the present application defined a matter that the second plate adheres to at least a part of an internal surface of a first plate in a through-thickness direction of the first plate.

Since the second plate in a suspension arm for a vehicle according to claim 1 of the present application adheres to an internal surface of a first plate in the through-thickness direction of the first plate, the suspension arm can have high rigidity Moreover, since the suspension arm of the present application is obtained not by bonding curved plates with each other as in Literature 1 but by assembling substantially flat components, it is possible to provide an inexpensive product, or in other words, it is possible to manufacture a suspension arm with high productivity, and present invention can further obtain the effect of space reduction.

Such the matter of present invention is not described in any one of Literature 1, Literature 2 (JP 2009-029229), Literature 3 (JP 2002-192261) and Literature 4 (JP 2002-205520), and the present invention is different from Literatures 1 to 4.
